# EUROPÄISCHE PATENTANMELDUNG

(11) **EP 3 241 708 A1**
(43) Veröffentlichungstag der Anmeldung: **08.11.2017**
(21) Anmeldenummer: 16000988.2
(22) Anmeldetag: 02.05.2016
(51) Int. Cl.: B60P 7/08

(54) **VERFAHREN ZUR LADUNGSSICHERUNG UND - ENTLADUNG FÜR ROLLCONTAINER**

(71) Anmelder: Pöpsel, Alexander, 73432 Aalen (DE)
(72) Erfinder: Pöpsel, Alexander, 73432 Aalen (DE)

(57) **Zusammenfassung**

Das Aufladen, die Ladungssicherung und die Entladung von Rollcontainer wird in einem Arbeitsgang und ohne manuellen Eingriff ermöglicht.

## Beschreibung

Die Erfindung bezieht sich auf die Ladungssicherung und der Entladung von Rollcontainern auf dem Ladebereich eines Lastkraftwagens

Dabei wird ein Rollcontainer mit dem Unterbau automatisch verbunden und Energieversorgung sowie Kommunikation zu Komponenten im Rollcontainer hergestellt.

### HINTERGRUND DER ERFINDUNG-ZU LÖSENDES PROBLEM

Schüttgut in Rollcontainern muss, um nicht vom Fahrtwind aus dem Behälter auf die Fahrbahn geweht zu werden, gesichert werden. Dazu werden in den allermeisten Fällen Netze verwendet; das Schüttgut wird über Entladevorrichtungen wie Klappen oder Luken entladen.

Sperriges und überbreites Ladegut wie z.B. Schalungen für den Betonbau oder Langholz, erfordern zusätzliche Signalanlagen, die mit Energie versorgt werden müssen.

Bisher besteht der Vorgang des Aufladens und der Ladungssicherung von Rollcontainern aus mehreren Arbeitsschritten. Diese verzögern die Abfahrt und beinhalten eine Unfallgefahr für den Fahrer des Lastkraftwagens.

Nach dem Rangieren und Aufladen eines Rollcontainers mit Schüttgütern wird dieser auf dem Fahrzeug verriegelt. Daraufhin folgt bisher die Ladungssicherung durch ein Netz, das per Hand über die Ladung gespannt und befestigt werden muss. Nach dem Absetzen des Rollcontainers muss das Netz wieder entfernt werden.

Zwar gibt es bereits Lösungen, die die Abdeckung einer Ladung automatisch zu realisieren, jedoch ist noch ein erhöhter Zeitaufwand für die Ankopplung solcher Systeme an die Fahrzeugelektrik notwendig und der Fahrer muss das Fahrzeug zu diesem Zweck verlassen.

Zusätzliche Signalanlagen, wie z.B. Rundumlichter, Fahr- und Bremslichter, die bei Rollcontainer mit überbreiter oder -langer Beladung vorgeschrieben sind, müssen mit Energie versorgt werden. Sie werden bisher, nach dem Aufladen auf dem LKW, vom Fahrer von Hand angebracht und mit Kabeln, die wiederum gesichert werden müssen, mit dem Bordnetz verbunden und vor dem Abladen wieder getrennt.

Entladevorrichtungen werden entweder hydraulisch per Hand betätigt oder müssen vom Fahrer von Hand per Kabel, das wiederum gesichert werden muss, mit dem Bordnetz des Lastkraftwagens verbunden und wieder getrennt werden.

Ist eine Ladungssicherung am Aufnahmeort aus organisatorischen Gründen oder aufgrund von Sicherheitsrichtlinien nicht möglich, so muss das Fahrzeug an eine anderen Ort rangiert werden und dort der Kopplungs- und Sicherungsprozess vorgenommen werden.

### STAND DER TECHNIK

Im Bereich des Fahrzeugbaus für den Einsatz in der Landwirtschaft, bei Muldenkippern oder Aufliegern gibt es mehrere Lösungen die eine automatische Ladungssicherung beinhalten.

So wird in US007954877 eine Abdeckung mit Hebearmen auf einen oben offenen Sattelauflieger in Längsrichtung angebracht. Das System ist auf dem Auflieger verbaut und wird mit diesem an die Fahrzeugelektrik gekoppelt.

US008998287 befasst sich mit einer Planenabdeckung für oben offene Container, bei der eine Plane in Querrichtung mittels Hebearmen gerollt wird. Auch hier muss die Elektrik manuell angekoppelt werden

Bei EP 2 371 597 A1 wird eine Planenabdeckung per Seilzug über einen oben offenen, fest verbauten Ladebereich gezogen. Es handelt sich hierbei aber um einen nicht wechselbaren Ladebereich.

Das Patent DE000060027662T2 bearbeitet ein Planenabdeckung für Lastkraftwagen die, gefaltet gelagert und auf Schienen laufend, einen oben offen Laderaum abdeckt. Es handelt sich hierbei um einen nicht wechselbaren Ladebereich.

Auf dem Markt befinden sich verschiedene Systeme wie "Speed Cover" oder "Toplift" von Fliegl, die Hydraulische Plane von Fuhrmann oder das "Hydraulisch Afdeksysteem van Duteweerd Mechanisatie". Diese Produkte sind auf Anhängern verbaut und werden per Hand mittels Kabel oder Hydraulikleitung mit einem Fahrzeug verbunden um die erforderliche elektrische Energie bzw. Hydraulikflüssigkeit für die Betätigung zu erhalten.

### AUFGABENSTELLUNG

Es ist Aufgabe vorliegender Erfindung, das Aufladen, Abladen und die Ladungssicherung von Rollcontainern soweit zu automatisieren, das ein Eingriff des Fahrers von Hand nicht notwendig ist. Der Vorgang soll soweit automatisiert werden, dass der Fahrer alle notwendigen Funktionen vom Fahrerhaus steuern kann. Dabei soll Zeitersparnis und eine Verringerung der Unfallgefahr erreicht werden.

### LÖSUNG

Diese Aufgabe wird durch ein System gelöst, bei dem automatische Ladungssicherungseinrichtungen oder Entladeeinrichtungen oder automatisch ausfahrende Signalanlagen auf einem Rollcontainer verbaut sind, wobei diese beim Aufladen des Schüttgutcontainers automatisch mit der Fahrzeugelektrik und dem Fahrzeugbus oder einem Steuer- und Sichtgerät zur Steuerung verbunden werden.

Über die Steuerung können die vorgenannten Komponenten vom Führerhaus aus betätigt werden, der Ordnungsgemäße Zustand wird von diesen durch eine Statusmeldung in den Fahrzeugbus oder das Steuergerät zurückgemeldet.

Optional befindet sich auf dem Fahrzeug ein Kamerasystem, durch das der Zustand der Ladungssicherung kontrolliert werden kann. Das Videobild wird entweder in den Fahrzeugbus oder das Steuer- und Sichtgerät eingespeist.

### BESCHREIBUNG ANHAND DER ZEICHNUNG

Die Zeichnungen beziehen sich auf die Variante mit Verbindung zu einem Fahrzeugbus und sind analog für eine Variante mit einem Steuer- und Sichtgerät zu verstehen.

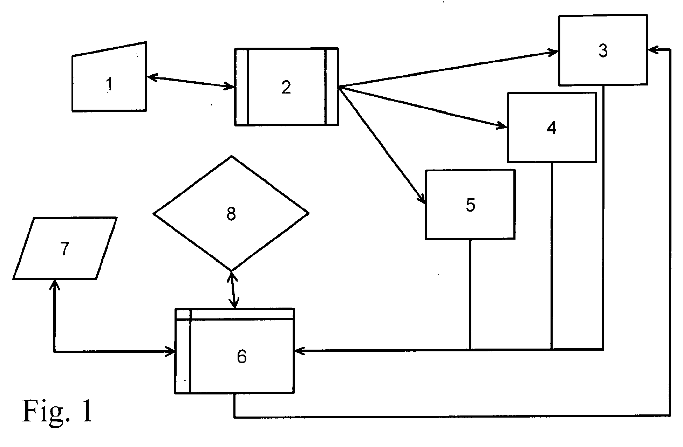

Fig. 1 zeigt den Ablauf des Aufladens (1) des Rollcontainers. Dabei erfolgt zeitgleich die Verbindung (2) zum Fahrzeugbus (4) und Meldung dieser Verbindung an den Fahrzeugbus (6) Dieser Status wird an einer Ein-/Ausgabeeinheit (7) angezeigt.

Zeitgleich erfolgt die Verbindung (2) zur Fahrzeugelektrik (5) und Meldung dieser Verbindung an den Fahrzeugbus (6) Dieser Status wird an einer Ein-/Ausgabeeinheit (7) angezeigt.

Zeitgleich erfolgt die Verbindung (2) zur Verriegelungseinheit (3) und Meldung dieser Verbindung an den Fahrzeugbus (6). Dieser Status wird an einer Ein-/Ausgabeeinheit (7) angezeigt.

Durch die Ein-/Ausgabeeinheit (7) wird das Verriegelungseinheit (3) über den Fahrzeugbus (6) manuell ausgelöst. Nach erfolgreicher Verriegelung wird dieser Status an den Fahrzeugbus (7) gemeldet an einer Ein-/Ausgabeeinheit (7) angezeigt.

Durch die Ein-/Ausgabeeinheit (7) werden die nun mit Energie und Kommunikation versorgten Komponenten (8) aktiviert. Nach erfolgreicher Anwendung der Komponenten wird dies an den Fahrzeugbus (7) gemeldet an einer Ein-/Ausgabeeinheit (7) angezeigt.

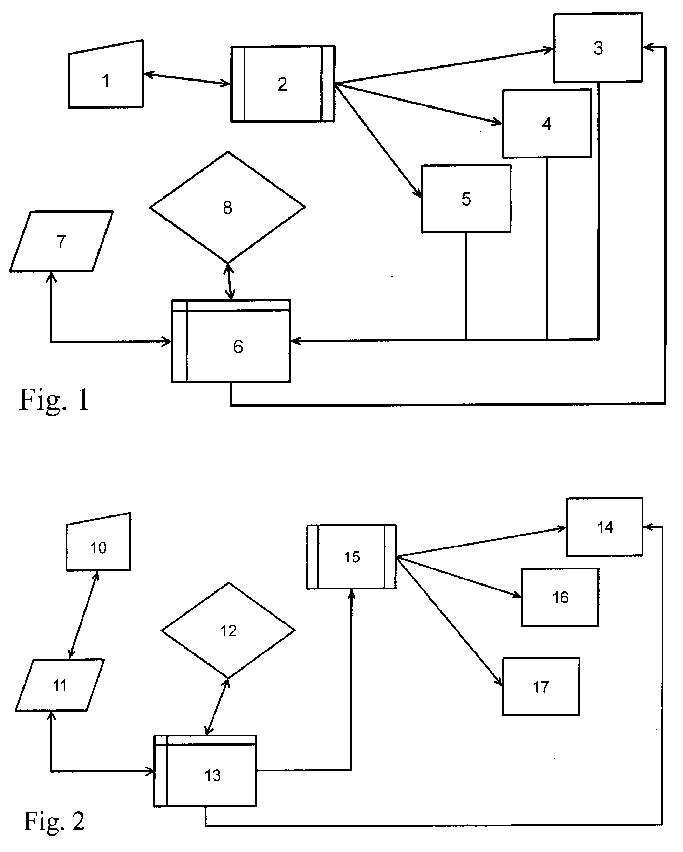

Fig. 2 zeigt den Ablauf von des Abladens (10) des Rollcontainers.

An der Ein-/Ausgabeeinheit (11) werden die Komponentenfunktionen (12) über den Fahrzeugbus (13) ausgelöst. Nach erfolgreicher Anwendung der Komponenten (12) wird dies über den Fahrzeugbus (13) an einer Ein-/Ausgabeeinheit (11) angezeigt.

Nach dem Lösen der Verriegelung (14) erfolgt zeitgleich zum Abladen des Rollcontainers die Lösung der Verbindungen zur Fahrzeugelektrik (16) und dem Fahrzeugbus (17). Diese Vorgänge werden über den Fahrzeugbus (13) an einer Ein-/Ausgabeeinheit (11) angezeigt.

## Patentansprüche

1. Verfahren zur Ladungssicherung und -entladung für Rollcontainer, **dadurch gekennzeichnet, dass** mechanische, elektrische und elektronische Komponenten des Rollcontainers beim Aufladevorgang über Kontaktelemente automatisch mit dem Fahrzeug verbunden sind.

2. Verfahren zur Ladungssicherung und -entladung für Rollcontainer nach Anspruch 1, **dadurch gekennzeichnet, dass** die Verbindung mechanisch, elektrisch, elektronisch, magnetisch, Kabellos oder per Induktion erfolgt.

3. Verfahren zur Ladungssicherung und -entladung für Rollcontainer nach Anspruch 1 und 2, **dadurch gekennzeichnet, dass** die Kommunikation mit den Komponenten bidirektional über den Fahrzeugbus in ein vorhandenes Steuerungssystem oder direkt in ein Steuergerät erfolgt.

4. Verfahren zur Ladungssicherung und -entladung für Rollcontainer nach Anspruch 1 - 3, **dadurch gekennzeichnet, dass** die Komponenten zur physischen Ladungssicherung dienen.

5. Verfahren zur Ladungssicherung und -entladung für Rollcontainer nach Anspruch 1 - 4, **dadurch gekennzeichnet, dass** die Komponenten zur Signalgebung eingesetzt sind.

6. Verfahren zur Ladungssicherung und -entladung für Rollcontainer nach Anspruch 1 - 5, **dadurch gekennzeichnet, dass** die Komponenten zur Entladung des Transportgutes dienen.

7. Verfahren zur Ladungssicherung und -entladung für Rollcontainer nach Anspruch 1 - 6, **dadurch gekennzeichnet, dass** sich alle oder einzelne Komponenten ohne Benutzereingriff direkt vom Fahrzeug steuern lassen.
